# EUROPEAN PATENT SPECIFICATION

(11) **EP 3 975 395 B1**
(45) Date of publication and mention of the grant of the patent: **06.05.2026**
(21) Application number: 19952332.5
(22) Date of filing: 29.11.2019
(51) Int. Cl.: H02K 15/00, B25B 27/06, F16C 35/06, H02K 7/08

(54) **DISASSEMBLY-FREE MOTOR BEARING DISASSEMBLY AND ASSEMBLY METHOD**
DEMONTAGEFREIE MOTORLAGERDEMONTAGE UND MONTAGEVERFAHREN
PROCÉDÉ D'ASSEMBLAGE ET DÉSASSEMBLAGE DE PALIER DE MOTEUR SANS DÉSASSEMBLAGE

(30) Priority: 14.11.2019 CN 201911114011
(43) Date of publication of application: 30.03.2022
(73) Proprietor: CRRC Zhuzhou Electric Co., Ltd, Zhuzhou, Hunan 412000 (CN)
(72) Inventor: SHEN, Zheng, Zhuzhou, Hunan 412000 (CN); WANG, Jibin, Zhuzhou, Hunan 412000 (CN); TANG, Zimou, Zhuzhou, Hunan 412000 (CN); HU, Gui, Zhuzhou, Hunan 412000 (CN); TANG, Liming, Zhuzhou, Hunan 412000 (CN); ZENG, Chun, Zhuzhou, Hunan 412000 (CN); WANG, Yihui, Zhuzhou, Hunan 412000 (CN); WANG, Wei, Zhuzhou, Hunan 412000 (CN); HUAI, Xiaoji, Zhuzhou, Hunan 412000 (CN); HUANG, Hongchen, Zhuzhou, Hunan 412000 (CN); YANG, Min, Zhuzhou, Hunan 412000 (CN)
(74) Representative: Lorenz Seidler Gossel Part. mbB
(86) International application number: PCT/CN2019/121876
(87) International publication number: WO 2021/093036

(56) References cited:
- CN-A- 102 474 162
- CN-A- 104 377 913
- CN-A- 104 377 913
- CN-A- 110 315 468
- CN-U- 203 956 854
- CN-U- 208 697 326
- DE-A1- 2 647 031
- JP-A- 2013 223 390
- JP-A- 2014 185 679
- US-A1- 2013 181 559
- US-A1- 2014 091 680
- US-A1- 2017 346 373

## Description

The present application claims the priority of Chinese Patent Application No. 201911114011.1, titled "DISASSEMBLY-FREE MOTOR BEARING DISASSEMBLY AND ASSEMBLY METHOD", filed with the Chinese Patent Office on November 14, 2019.

### FIELD

The present application relates to the technical field of motors, and in particular to a disassembly-free disassembly and assembly method for a motor bearing.

### BACKGROUND

With the rapid development of rail transportation, the operation and maintenance requirements and technical level of rail vehicles are increasing day by day.

A traction motor is generally used for power drive in a trunk railway electric locomotive, an industrial and mining electric locomotive, an electric drive diesel locomotive and various electric vehicles. The traction motor mainly includes a rotor and a stator, the operating principle of which is the same as the operating principle of an ordinary motor. In order to ensure the smooth rotation of the rotor, a bearing is mounted on the rotor. The working status and maintenance requirements of components in the vehicle vary, and the bearing of the rotor is a core stressed member. In order to ensure the safe operation of the vehicle, the maintenance of the bearing is extremely critical, and the bearing must be tested or replaced within a specified time period or kilometers.

The structural arrangement of the conventional traction motor results in that the motor must be first disassembled to separate the stator from the rotor, and then the bearing is pulled out from a bearing chamber to complete the detection or replacement work. The common practice in the conventional technology is to unload the motor and deliver it back to the manufacture, and then the motor is disassembled with a special tool, the stator is separated from the rotor, and then the bearing is pulled out for detection or replacement. The entire disassembly cycle is long, the process is cumbersome, a specific site and special tooling are required, and the maintenance cost and maintenance resource consumption are large. Especially when the faulty bearing needs to be disassembled, the above process cannot be simplified, which results in a large time span for fault analysis and solution, and is not conducive to the rapid solution of the problem and the reduction of economic losses caused by the fault.

When the existing motor bearing is repaired and replaced, the motor generally needs to be disassembled, the rotor of the motor is pulled out of the motor, and then the bearing is pulled out with a specific device, and finally a new bearing is remounted on a rotating shaft through tooling, the rotor is put back into the motor, and the motor is remounted. The entire replacement process is complex and time-consuming. In addition, in the process of disassembling and reassembling the motor, it is difficult to accurately reset the rotor rotating shaft to an axle center, which has a risk of motor damage caused by human operation error, and lays a hidden quality risk for the safe operation of the motor.

Therefore, how to realize the disassembly-free disassembly and replacement of the motor bearing, improve the efficiency of the disassembly and replacement, and avoid the displacement of the rotor during the disassembly and replacement, is a technical problem faced by those skilled in the art.

JP2014185679A discloses a bearing removing method, a bearing replacing method, a jig for bearing replacement and a wave power generation device. There are provided: a step of coupling a jig for bearing replacement to a shaft end of a flywheel which is rotatably supported by a bearing in a gimbal casing; a step of removing the bearing and moving the same to the jig for bearing replacement; a step of disposing a support member between the gimbal casing and the flywheel in place of the bearing; and a step of releasing the coupling of the jig for bearing replacement to the flywheel.

JP2013223390A discloses a method for replacing bearing part of rotary electric machine and a replacement holder thereof, a joining shaft is fixed to an end part of a rotating shaft part of a rotary electric machine, a first holder for supporting the joining shaft is fixed to a bearing bracket to remove a bearing assembly from the bearing bracket, a second holder for supporting the rotating shaft with the bearing assembly removed is then fixed to the bearing bracket to remove the bearing assembly and the first holder, and after that a new bearing assembly is inserted between the bearing bracket and the rotating shaft.

CN104377913A discloses a disassembling structure and a method enabling a generator bearing to be replaced on site. The structure comprises a temporary support, a split type annular sizing block and a generator with a bearing capable of being disassembled. The generator with the bearing capable of being disassembled comprises a generator end cover, a main shaft, the bearing and a bearing seat. The main shaft is in interference fit with the bearing. During disassembling, one end of the temporary support is arranged on the main shaft in a sleeving mode, the other end of the temporary support is connected with the generator end cover, and after the bearing and the bearing seat are disassembled, the split type annular sizing block which is installed in a sleeved mode is arranged between the generator end cover and the main shaft to support the generator end cover. By means of the disassembling structure and the method, bearings at the front end and the rear end of the generator can be disassembled and replaced on site, at a high altitude and in a narrow cabin, the abrasion degree of the bearing can be observed conveniently, resources are greatly saved, the labor intensity of workers is relieved, hoisting cost is reduced, and field difficulties are overcome conveniently and quickly.

US2014/091680A1 discloses a rotary electric machine. The rotary electric machine includes a stator core; a rotor that includes a laminated core, core holders, and cooling fans; a frame that includes a tubular unit that encloses the stator core and the rotor, and a first bracket and a second bracket that extend in a direction of a rotor shaft and supports the rotor shaft; and cartridges that are detachably attached to the first bracket and the second bracket and rotatably supports the rotor shaft, wherein groove-like or hole-like holding portions, which hold end portions of bearing attaching and detaching jigs inserted through the first bracket and the second bracket, are provided in the cooling fans.

US2013/181559A1 discloses a rotary electric machine including a stator iron core, a rotor including a lamination core that is arranged within the stator iron core and is constituted by laminating electromagnetic steel plates and iron core holders that cover both ends of the lamination core, a frame including a cylindrical portion that encloses the stator iron core and the rotor and a rotor-shaft supporting unit that extends in the direction of a rotor shaft and supports the rotor shaft, and cartridges that are detachably attached to the rotor-shaft supporting unit and rotatably support the rotor shaft, in which on the iron core holder and the iron core holder, recessed portions are circumferentially provided, into which end portions of jigs that are inserted through the rotor-shaft supporting unit to enable the cartridges to be detached and attached are fitted.

### SUMMARY

An object of the present application is to provide a disassembly and assembly method for a motor bearing, which can realize the disassembly-free disassembly and replacement of the motor bearing, improve the efficiency of the disassembly and replacement, and avoid a displacement of a rotor during the disassembly and replacement.

In order to solve the above technical problems, a disassembly and assembly method for a motor bearing is provided, which includes:
inserting axially multiple mounting rods into multiple mounting holes on an end surface of an end cover, and mounting sequentially a clamping-positioning member and an abutting-positioning member on the multiple mounting rods;
pressing against an outer end surface of a rotor rotating shaft by the abutting-positioning member for positioning, and pulling out axially an original bearing assembly mounted on the rotor rotating shaft to between the clamping-positioning member and the abutting-positioning member, where the clamping-positioning member remains in an initial state, and maintains sufficient sliding space for the original bearing assembly to pass through the clamping-positioning member;
adjusting the clamping-positioning member to clamp a surface of the rotor rotating shaft for positioning and adjusting the abutting-positioning member to disengage the abutting-positioning member from the outer end surface of the rotor rotating shaft, and pulling out axially the original bearing assembly from an outer end of the rotor rotating shaft;
sliding axially a new bearing assembly from the outer end of the rotor rotating shaft to between the clamping-positioning member and the abutting-positioning member, adjusting the abutting-positioning member to press against the outer end surface of the rotor rotating shaft again, and adjusting the clamping-positioning member to loosen the rotor rotating shaft; and
sliding axially the new bearing assembly to a mounting position on the rotor rotating shaft.

Preferably, before inserting the multiple mounting rods on the end surface of the end cover, the method further includes:
connecting axially an auxiliary shaft configured to extend an operating space to the outer end of the rotor rotating shaft.

Preferably, the connecting an auxiliary shaft to the outer end of the rotor rotating shaft specifically includes:
defining a threaded hole at an axle center on the outer end surface of the rotor rotating shaft, and providing a threaded column at an axle center on an inner end surface of the auxiliary shaft to realize detachable connection between the auxiliary shaft and the rotor rotating shaft via a cooperation of the threaded hole and the threaded column.

Preferably, the inserting the multiple mounting rods on the end surface of the end cover specifically includes:
determining 4 to 8 mounting holes on the end surface of the end cover along a circumference with a predetermined radius, inserting axially each of the mounting rods into the corresponding mounting hole, and threadedly connecting an end of each of the mounting rods with the corresponding mounting hole.

Preferably, the mounting sequentially a clamping-positioning member and an abutting-positioning member on the multiple mounting rods specifically includes:
sleeving the clamping-positioning member simultaneously onto the multiple mounting rods, and sliding the clamping-positioning member axially by a predetermined distance to a position corresponding to the surface of the rotor rotating shaft;
sleeving the abutting-positioning member simultaneously onto the multiple mounting rods, and sliding the abutting-positioning member axially to ends of the multiple mounting rods and keeping a surface of the abutting-positioning member abutting against the outer end surface of the rotor rotating shaft; and
fixing the abutting-positioning member at a current position via fasteners at the ends of the multiple mounting rods.

Preferably, when the clamping-positioning member is adjusted, a clamping radius of the clamping-positioning member is adjusted to clamp or loose the surface of the rotor rotating shaft; and when the abutting-positioning member is adjusted, a sliding distance of the abutting-positioning member on the multiple mounting rods is adjusted to press the abutting-positioning member against or disengage the abutting-positioning member from the outer end surface of the rotor rotating shaft.

Preferably, when the original bearing assembly is pulled out or the new bearing assembly is slid in, a force is applied axially to an outer end surface of the original bearing assembly or the new bearing assembly by a drive system.

Preferably, after sliding axially the new bearing assembly to a mounting position on the rotor rotating shaft, the method further includes:
adjusting the abutting-positioning member to disengage the abutting-positioning member from the outer end surface of the rotor rotating shaft;
sliding sequentially the abutting-positioning member and the clamping-positioning member out from the multiple mounting rods; and
removing the multiple mounting rods from the multiple mounting holes.

The disassembly and assembly method for a motor bearing provided according to the present application mainly includes five steps. In the first step, the multiple mounting rods are axially inserted into the multiple mounting holes on the end surface of the end cover, and the clamping-positioning member and the abutting-positioning member are sequentially mounted on the multiple mounting rods, wherein the abutting-positioning member is kept outside, and the clamping-positioning member is kept inside. In the second step, after the clamping-positioning member and the abutting-positioning member are mounted, initial positions of the two on the multiple mounting rods are adjusted, so that the surface of the abutting-positioning member smoothly abuts against and presses against the outer end surface of the rotor rotating shaft, which forms axial positioning and circumferential positioning (in a case that an axial pressing force is large enough, the circumferential positioning is realized by a surface static friction force at the same time), and the clamping-positioning member remains untouched. The original bearing assembly (including an original bearing and an original bearing seat) is then to be disassembled. Since the clamping-positioning member maintains sufficient sliding space in an initial state for the original bearing assembly, the original bearing assembly mounted at the inner end of the rotor rotating shaft is pulled out first and slid to between the clamping-positioning member and the abutting-positioning member. In the third step, since the abutting-positioning member presses against the outer end surface of the rotor rotating shaft, the original bearing assembly cannot be directly pulled out, the clamping-positioning member is adjusted first to clamp the rotor rotating shaft tight to maintain the circumferential positioning and support, and the abutting-positioning member is then adjusted to disengage the abutting-positioning member from the outer end surface of the rotor rotating shaft and leave enough sliding space for the original bearing assembly, and then the original bearing assembly can be pulled out from the outer end of the rotor rotating shaft. In the fourth step, the new bearing assembly (including a new bearing and a new bearing seat) is slid in axially from the outer end of the rotor rotating shaft to between the clamping-positioning member and the abutting-positioning member, then the abutting-positioning member is first adjusted to press against the outer end surface of the rotor rotating shaft again to maintain the axial and circumferential positioning, and then the clamping-positioning member is adjusted to loosen the rotor rotating shaft to similarly leave enough sliding space for the new bearing assembly. Finally, in the fifth step, the new bearing assembly is axially slid to a mounting position on the rotor rotating shaft, completing the disassembly and replacement of the motor bearing. In summary, in the disassembly and assembly method for a motor bearing provided according to the present application, the rotor rotating shaft is clamped or pressed tight by the clamping-positioning member and the abutting-positioning member, and the removal of the original bearing assembly and the mounting of the new bearing assembly are stably and sequentially completed by alternate clamping and pressing between the two and the rotor rotating shaft. In addition, during the entire disassembly and replacement, the rotor rotating shaft is always positioned by clamping or pressing, so as to avoid the displacement of the rotor during the disassembly and replacement, and ensure the accuracy of the disassembly and replacement. Compared with the conventional technology, there is no need to disassemble the motor or to separate the stator from the rotor, the process of the entire disassembly and replacement is simple and easy, the operation efficiency is high, and the time for disassembly and replacement is saved.

### BRIEF DESCRIPTION OF THE DRAWINGS

For more clearly illustrating embodiments of the present application or the technical solutions in the conventional technology, drawings referred to for describing the embodiments or the conventional technology will be briefly described hereinafter. Apparently, the drawings in the following description are only embodiments of the present application, and for the person skilled in the art, other drawings may be obtained based on the provided drawings without any creative efforts.
FIG. 1 is a flowchart of a specific embodiment according to the present application;
FIG. 2 is a schematic view showing a mounting structure of a clamping-positioning member and an abutting-positioning member on a rotor rotating shaft;
FIG. 3 is a schematic structural view of pulling out an original bearing assembly to between the clamping-positioning member and the abutting-positioning member;
FIG. 4 is a schematic structural view of pulling out the original bearing assembly from the rotor rotating shaft; and
FIG. 5 is a schematic structural view of mounting a new bearing assembly to between the clamping-positioning member and the abutting-positioning member.

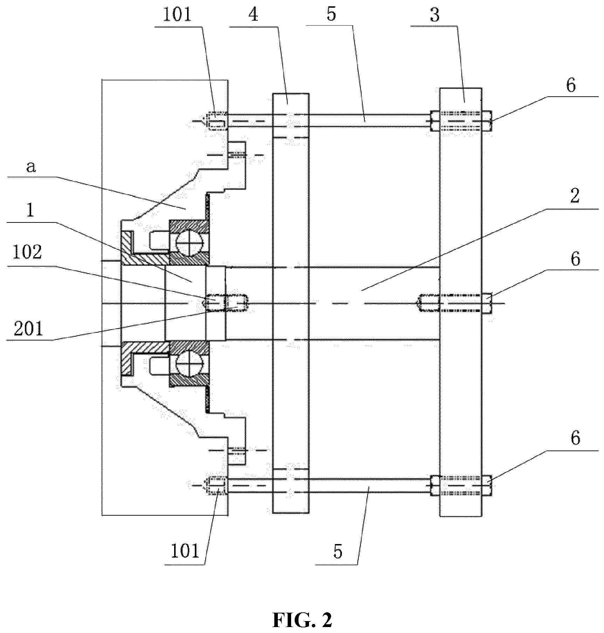

Reference numerals in FIGS. 2 to 5 are listed as follows:

| | | | |
|---|---|---|---|
| a- | original bearing assembly, | b- | new bearing assembly; |
| 1- | rotor rotating shaft, | 2- | auxiliary shaft, |
| 3- | abutting-positioning member, | 4- | clamping-positioning member, |
| 5- | mounting rod, | 6- | fastener; |
| 101- | mounting hole, | 102- | threaded hole, |
| 201- | threaded column. | | |

### DETAILED DESCRIPTION OF THE EMBODIMENTS

The technical solutions in the embodiments of the present application are clearly and completely described in the following with reference to the accompanying drawings in the embodiments of the present application. Apparently, the embodiments described herein are only a part rather than all of the embodiments of the present application.

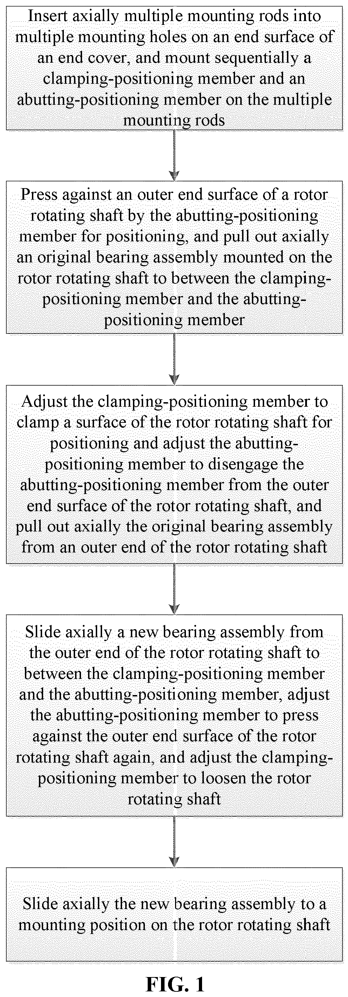

Referring to FIG. 1, FIG. 1 is a flowchart of a specific embodiment according to the present application.

In the specific embodiment according to the present application, a disassembly and assembly method for a motor bearing includes six steps, which specifically are as follows:
S1, inserting axially multiple mounting rods 5 into multiple mounting holes 101 on an end surface of an end cover, and mounting sequentially a clamping-positioning member 4 and an abutting-positioning member 3 on the multiple mounting rods;
S2, pressing against an outer end surface of a rotor rotating shaft 1 by the abutting-positioning member 3 for positioning, and pulling out axially an original bearing assembly a mounted on the rotor rotating shaft 1 to between the clamping-positioning member 4 and the abutting-positioning member 3, where the clamping-positioning member 4 remains in an initial state, and maintains sufficient sliding space for the original bearing assembly a to pass through the clamping-positioning member 4;
S3, adjusting the clamping-positioning member 4 to clamp a surface of the rotor rotating shaft 1 for positioning and adjusting the abutting-positioning member 3 to disengage the abutting-positioning member 3 from the outer end surface of the rotor rotating shaft 1, and pulling out axially the original bearing assembly a from an outer end of the rotor rotating shaft 1;
S4, sliding axially a new bearing assembly b from the outer end of the rotor rotating shaft 1 to between the clamping-positioning member 4 and the abutting-positioning member 3, adjusting the abutting-positioning member 3 to press against the outer end surface of the rotor rotating shaft 1 again, and adjusting the clamping-positioning member 4 to loosen the rotor rotating shaft 1; and
S5, sliding axially the new bearing assembly B to a mounting position on the rotor rotating shaft 1.

In step S1, the multiple mounting rods 5 are axially inserted into the multiple mounting holes 101 on the end surface of the end cover, and the clamping-positioning member 4 and the abutting-positioning member 3 are sequentially mounted on the multiple mounting rods 5, wherein the abutting-positioning member 3 is kept outside, and the clamping-positioning member 4 is kept inside. Generally, the end surface of the end cover is perpendicular to a horizontal plane, and is perpendicular to an axial direction of the rotor rotating shaft 1. The multiple mounting holes 101 are generally defined horizontally, and are evenly distributed in a circumferential direction on the end surface of the end cover, and are arranged in several layers along a radial direction. In this way, when the multiple mounting rods 5 are inserted, a circle of mounting holes 101 distributed along a circumference may be determined on the end surface of the end cover according to a predetermined radius. At least 4 mounting holes, for example 4 to 8, may be selected at one time, and the mounting rods 5 are respectively inserted into the selected mounting holes 101.

In addition, in order to facilitate the disassembly and assembly of the multiple mounting rods 5 on the end cover, ends of the multiple mounting rods 5 may be threadedly connected to the multiple mounting holes 101. Alternatively, the multiple mounting rods 5 may be mounted on the end cover by forming a clamping connection with the multiple mounting holes 101.

Further, when the clamping-positioning member 4 and the abutting-positioning member 3 are mounted on the multiple mounting rods 5, the mounting can be realized by sliding connection respectively. Specifically, multiple through holes may be defined in a circumferential direction of the clamping-positioning member 4, and the clamping-positioning member 4 is mounted on the multiple mounting rods 5 through cooperation of the multiple through holes and the multiple mounting rods 5, and a sliding position of the clamping-positioning member 4 is adjustable along an axial direction of the multiple mounting rods 5, so as to clamp the surface of the rotor rotating shaft 1 at a predetermined position. Similarly, multiple through holes are defined in a circumferential direction of the abutting-positioning member 3, and sliding mounting and position adjustment of the abutting-positioning member 3 are realized through cooperation of the multiple through holes and the multiple mounting rods 5. In addition, since the abutting-positioning member 3 needs to abut against the outer end surface of the rotor rotating shaft 1, a fastener 6 such as an adjusting nut, may be respectively provided on each of the multiple mounting rods 5 to fix the mounting position of the abutting-positioning member 3. Generally, when the abutting-positioning member 3 is located at ends of the multiple mounting rods 5, the surface of the abutting-positioning member 3 just abuts against the outer end surface of the rotor rotating shaft 1.

In step S2, after the clamping-positioning member 4 and the abutting-positioning member 3 are mounted, initial positions of the two on the multiple mounting rods 5 are adjusted, so that the clamping-positioning member 4 is aligned with the surface of the rotor rotating shaft 1, which can smoothly form stable clamping for the surface of the rotor rotating shaft 1, thus forming axial positioning and circumferential positioning for the rotor rotating shaft 1. In the meantime, the surface of the abutting-positioning member 3 smoothly abuts against and presses against the outer end surface of the rotor rotating shaft 1, which forms axial positioning and circumferential positioning (in a case that an axial pressing force is large enough, the circumferential positioning is realized by a surface static friction force at the same time).

After the mounting positions of the clamping-positioning member 4 and the abutting-positioning member 3 are adjusted, the original bearing assembly a (including an old bearing and an old bearing seat) can be disassembled. The abutting-positioning member 3 is first adjusted, so that its surface is pressed against the outer end surface of the rotor rotating shaft 1, and then the original bearing assembly a mounted at an inner end of rotor rotating shaft 1 is pulled out and slid to between the clamping-positioning member 4 and the abutting-positioning member 3. At this time, the clamping-positioning member 4 remains in an initial state, and maintains sufficient sliding space for the original bearing assembly a, so as to ensure that the original bearing assembly a can pass through the clamping-positioning member 4 smoothly.

In the step S3, since the abutting-positioning member 3 presses against the outer end surface of the rotor rotating shaft 1, the original bearing assembly a cannot be directly pulled out. At this time, the clamping-positioning member 4 is adjusted first to clamp tight the surface of the rotor rotating shaft 1, to support and fix the rotor rotating shaft 1 circumferentially, and to prevent shaking during the pulling operation. The abutting-positioning member 3 is then adjusted to disengage the abutting-positioning member 3 from the outer end surface of the rotor rotating shaft 1 and leave enough sliding space for the original bearing assembly a, and then the original bearing assembly a can be pulled out from the outer end of the rotor rotating shaft 1.

In the step S4, the new bearing assembly b (including a new bearing and a new bearing seat) is slid in axially from the outer end of the rotor rotating shaft 1 to between the clamping-positioning member 4 and the abutting-positioning member 3, then the abutting-positioning member 3 is first adjusted to press against the outer end surface of the rotor rotating shaft 1 again to maintain the axial and circumferential positioning, and then the clamping-positioning member 4 is adjusted to loosen the rotor rotating shaft 1 to similarly leave enough sliding space for the new bearing assembly b.

Finally, in the step S6, the new bearing assembly b is axially slid to a mounting position on the rotor rotating shaft 1, completing the disassembly and replacement of the motor bearing.

In summary, in the disassembly and assembly method for a motor bearing provided according to the present application, the rotor rotating shaft 1 is clamped or pressed tight by the clamping-positioning member 4 and the abutting-positioning member 3, and the removal of the original bearing assembly a and the mounting of the new bearing assembly b are stably and sequentially completed by alternate clamping and pressing between the two and the rotor rotating shaft 1. In addition, during the entire disassembly and replacement, the rotor rotating shaft 1 is always positioned by clamping or pressing, so as to avoid the displacement of the rotor during the disassembly and replacement, and ensure the accuracy of the disassembly and replacement. Compared with the conventional technology, there is no need to disassemble the motor or to separate the stator from the rotor, the process of the entire disassembly and replacement is simple and easy, the operation efficiency is high, and the time for disassembly and replacement is saved.

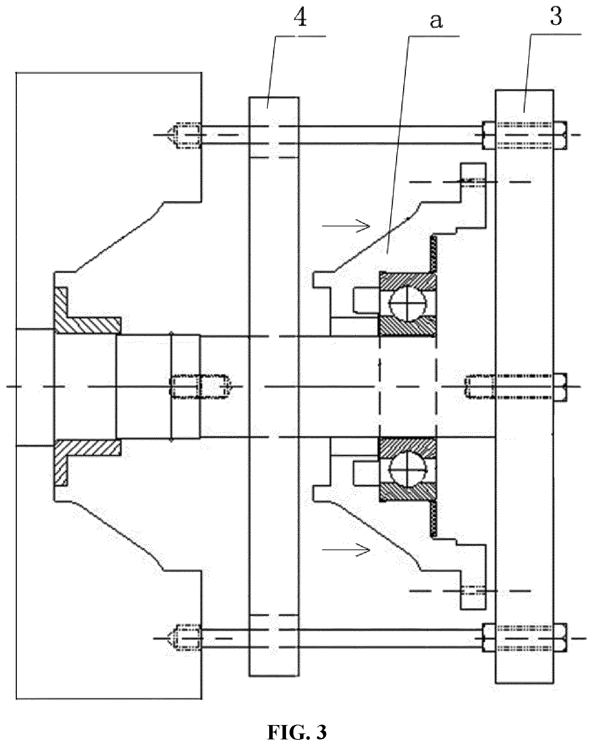

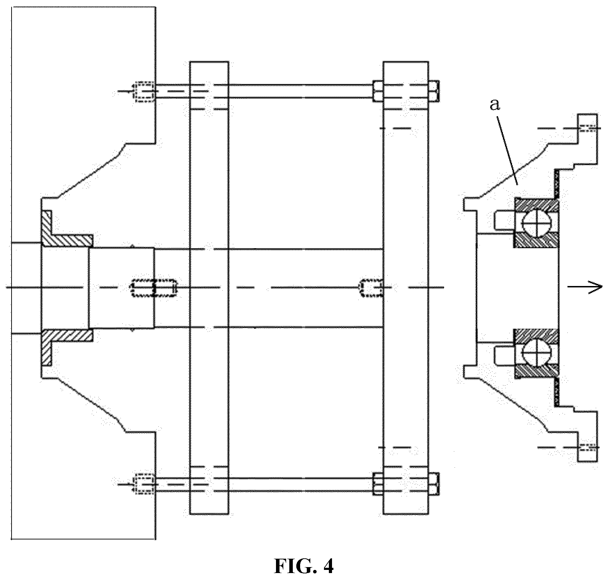

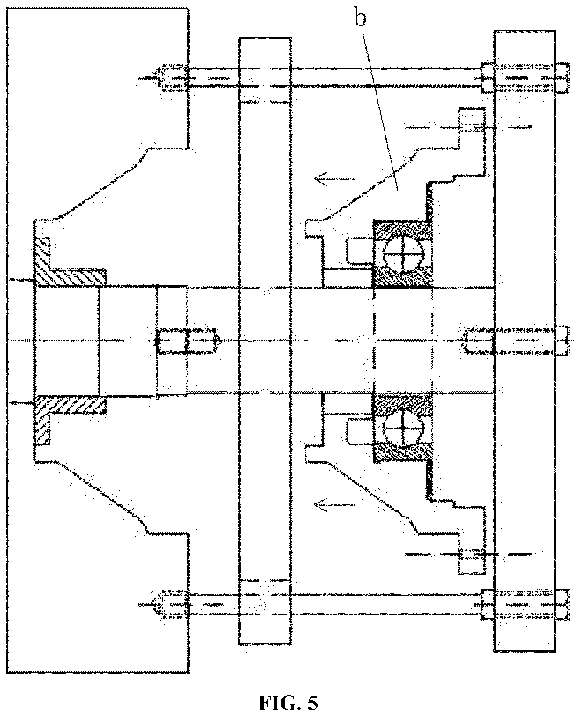

As shown in FIGS. 2 to 5, FIG. 2 is a schematic view showing a mounting structure of the clamping-positioning member 4 and the abutting-positioning member 3 on the rotor rotating shaft 1; FIG. 3 is a schematic structural view of pulling out the original bearing assembly a to between the clamping-positioning member 4 and the abutting-positioning member 3; FIG. 4 is a schematic structural view of pulling out the original bearing assembly a from the rotor rotating shaft 1; and FIG. 5 is a schematic structural view of mounting the new bearing assembly b to between the clamping-positioning member 4 and the abutting-positioning member 3.

In a preferred embodiment, considering that an axial extension length of the rotor rotating shaft 1 of the motor in some models or sizes is relatively short, it is difficult to clamp and position on the rotor rotating shaft 1. For this reason, in this embodiment, an auxiliary shaft 2 is connected to the outer end of the rotor rotating shaft 1 before clamping and positioning the rotor rotating shaft 1.

Specifically, a threaded hole 102 at an axle center is defined on the outer end surface of the rotor rotating shaft 1, and a threaded column 201 at an axle center is provided on an inner end surface of the auxiliary shaft 2, and the threaded column 201 forms a threaded connection with the threaded hole 102. In this way, the auxiliary shaft 2 can be mounted on the rotor rotating shaft 1 via the cooperation between the threaded column 201 and the threaded hole 102, and the auxiliary shaft 2 can be easily detached from the rotor rotating shaft 1 by screwing. Preferably, an axial length of the auxiliary shaft 2 may be equal to the extension length of the rotor rotating shaft 1, which is equivalent to doubling the extension length of the rotor rotating shaft 1, so that the clamping-positioning member 4 has sufficient clamping space. Besides, a diameter of the auxiliary shaft 2 may be equal to a diameter of the rotor rotating shaft 1.

In a case that the extension length of the rotor rotating shaft 1 is large enough, there is no need to additionally provide the auxiliary shaft 2. In this case, the clamping-positioning member 4 directly abuts against the surface of the rotor rotating shaft 1, and the abutting-positioning member 3 directly abuts against the outer end surface of the rotor rotating shaft 1. In the case that the auxiliary shaft 2 is connected to the rotor rotating shaft 1, the clamping-positioning member 4 can clamp the surface of the auxiliary shaft 2, and the abutting-positioning member 3 can abut against an outer end surface of the auxiliary shaft 2. In the following content of this embodiment, the auxiliary shaft 2 is described as a part of the rotor rotating shaft 1.

A connection method of the auxiliary shaft 2 and the rotor rotating shaft 1 is not limited to the threaded hole 102 and the threaded column 201. For example, a clamping groove is defined on the outer end surface of the rotor rotating shaft 1, and an inserting block is provided on the inner end surface of the auxiliary shaft 2, so that the auxiliary shaft 2 can be detachably connected to the rotor rotating shaft 1 through the clamping connection between the clamping groove and the inserting block.

In order to facilitate the adjustment of the clamping-positioning member 4 and the abutting-positioning member 3, a clamping radius of the clamping-positioning member 4 in this embodiment is adjustable, that is, a clamping range can be enlarged or reduced by adjusting the clamping radius, so that the rotor rotating shaft 1 is clamped or loosened by adjusting the clamping radius according to the diameter of the rotor rotating shaft 1. When the original bearing assembly a or the new bearing assembly b needs to pass through the clamping-positioning member 4, the clamping range of the clamping-positioning member 4 can be expanded to the maximum, which is enough for the original bearing assembly a or the new bearing assembly b to pass through smoothly.

In addition, the mounting position of the abutting-positioning member 3 on the multiple mounting rods 5 is adjustable. When the original bearing assembly a or the new bearing assembly b needs to pass through the abutting-positioning member 3, the fasteners 6 arranged on the multiple mounting rods 5 are removed, and the abutting-positioning member 3 is removed from the multiple mounting rods 5. Besides, another fastener 6 may be added at a circle center of the abutting-positioning member 3, and the abutting-positioning member 3 is fixed to a reserved hole defined on the outer end surface of the rotor rotating shaft 1 via the another fastener 6. When the fasteners 6 on the multiple mounting rods 5 are removed, it is required to remove the fastener 6 at the circle center at the same time, and the fastener 6 at the circle center can improve the stability and accuracy of the axial positioning and the circumferential positioning of the abutting-positioning member 3 to the rotor rotating shaft 1.

During the disassembly and replacement of the motor bearing, in order to ensure that the original bearing assembly a and the new bearing assembly b can slide stably along the axial direction of the rotor rotating shaft 1, in this embodiment, an output end of a drive system is connected to the outer end surface of the original bearing assembly a or the new bearing assembly b, and applies pressure or thrust along the axial direction of the rotor rotating shaft 1.

In addition, after the new bearing assembly b is slid to the mounting position on the rotor rotating shaft 1 and the disassembly and replacement are completed, the abutting-positioning member 3 can be continuously adjusted to disengage the abutting-positioning member 3 from the outer end surface of the rotor rotating shaft 1, and the abutting-positioning member 3 is removed from the multiple mounting rods 5, and then the clamping-positioning member 4 is removed from the multiple mounting rods 5, and finally the multiple mounting rods 5 are removed from the multiple mounting holes 101, and the end cover of the motor is restored to its original state.

According to the above description of the disclosed embodiments, those skilled in the art can implement or practice the present application. Various modifications to these embodiments are obvious to a person skilled in the art, and the general principles defined herein may be implemented in other embodiments without departing from the scope of the appended claims.

## Claims

1. A disassembly and assembly method for a motor bearing, comprising:
inserting axially a plurality of mounting rods (5) into a plurality of mounting holes (101) on an end surface of an end cover, and mounting sequentially a clamping-positioning member (4) and an abutting-positioning member (3) on the plurality of mounting rods (5);
pressing against an outer end surface of a rotor rotating shaft (1) by the abutting-positioning member (3) for positioning, and pulling out axially an original bearing assembly (a) mounted on the rotor rotating shaft (1) to between the clamping-positioning member (4) and the abutting-positioning member (3), wherein the clamping-positioning member (4) remains in an initial state, and maintains sufficient sliding space for the original bearing assembly (a) to pass through the clamping-positioning member (4);
adjusting the clamping-positioning member (4) to clamp a surface of the rotor rotating shaft (1) for positioning and adjusting the abutting-positioning member (3) to disengage the abutting-positioning member (3) from the outer end surface of the rotor rotating shaft (1), and pulling out axially the original bearing assembly (a) from an outer end of the rotor rotating shaft (1);
sliding axially a new bearing assembly (b) from the outer end of the rotor rotating shaft (1) to between the clamping-positioning member (4) and the abutting-positioning member (3), adjusting the abutting-positioning member (3) to press against the outer end surface of the rotor rotating shaft (1) again, and adjusting the clamping-positioning member (4) to loosen the rotor rotating shaft (1); and
sliding axially the new bearing assembly (b) to a mounting position on the rotor rotating shaft (1).

2. The disassembly and assembly method for a motor bearing according to claim 1, wherein before inserting the plurality of mounting rods (5) on the end surface of the end cover, the method further comprises:
connecting axially an auxiliary shaft (2) configured to extend an operating space to the outer end of the rotor rotating shaft (1).

3. The disassembly and assembly method for a motor bearing according to claim 2, wherein the connecting an auxiliary shaft (2) to the outer end of the rotor rotating shaft (1) comprises:
defining a threaded hole (102) at an axle center on the outer end surface of the rotor rotating shaft (1), and providing a threaded column at an axle center on an inner end surface of the auxiliary shaft (2) to realize detachable connection between the auxiliary shaft (2) and the rotor rotating shaft (1) via a cooperation of the threaded hole (102) and the threaded column.

4. The disassembly and assembly method for a motor bearing according to claim 1, wherein the inserting the plurality of mounting rods (5) on the end surface of the end cover comprises:
determining 4 to 8 mounting holes (101) on the end surface of the end cover along a circumference with a predetermined radius, inserting axially each of the mounting rods (5) into the corresponding mounting hole (101), and threadedly connecting an end of each of the mounting rods (5) with the corresponding mounting hole (101).

5. The disassembly and assembly method for a motor bearing according to claim 4, wherein the mounting sequentially a clamping-positioning member (4) and an abutting-positioning member (3) on the plurality of mounting rods (5) comprises:
sleeving the clamping-positioning member (4) simultaneously onto the plurality of mounting rods (5), and sliding the clamping-positioning member (4) axially by a predetermined distance to a position corresponding to the surface of the rotor rotating shaft (1);
sleeving the abutting-positioning member (3) simultaneously onto the plurality of mounting rods (5), and sliding the abutting-positioning member (3) axially to ends of the plurality of mounting rods (5) and keeping a surface of the abutting-positioning member (3) abutting against the outer end surface of the rotor rotating shaft (1); and
fixing the abutting-positioning member (3) at a current position via fasteners (6) at the ends of the plurality of mounting rods (5).

6. The disassembly and assembly method for a motor bearing according to claim 1, wherein when the clamping-positioning member (4) is adjusted, a clamping radius of the clamping-positioning member (4) is adjusted to clamp or loose the surface of the rotor rotating shaft (1); and when the abutting-positioning member (3) is adjusted, a sliding distance of the abutting-positioning member (3) on the plurality of mounting rods (5) is adjusted to press the abutting-positioning member (3) against or disengage the abutting-positioning member (3) from the outer end surface of the rotor rotating shaft (1).

7. The disassembly and assembly method for a motor bearing according to claim 1, wherein when the original bearing assembly (a) is pulled out or the new bearing assembly (b) is slid in, a force is applied axially to an outer end surface of the original bearing assembly (a) or the new bearing assembly (b) by a drive system.

8. The disassembly and assembly method for a motor bearing according to claim 7, wherein after sliding axially the new bearing assembly (b) to a mounting position on the rotor rotating shaft (1), the method further comprises:
adjusting the abutting-positioning member (3) to disengage the abutting-positioning member (3) from the outer end surface of the rotor rotating shaft (1);
sliding sequentially the abutting-positioning member (3) and the clamping-positioning member (4) out from the plurality of mounting rods (5); and
removing the plurality of mounting rods (5) from the plurality of mounting holes (101).

## Patentansprüche

1. Demontage- und Montageverfahren für ein Motorlager, umfassend:
axiales Einführen einer Mehrzahl von Montagestangen (5) in eine Mehrzahl von Montagelöchern (101) an einer Endfläche eines Enddeckels, und sukzessives Montieren eines Klemm-Positionierelements (4) und eines Abstütz-Positionierelements (3) auf der Mehrzahl von Montagestangen (5);
Andrücken des Abstütz-Positionierelements (3) gegen eine äußere Endfläche einer Rotorwelle (1) zur Positionierung, und axiales Herausziehen einer ursprünglichen Lagerbaugruppe (a), die auf der Rotorwelle (1) montiert ist, in den Bereich zwischen dem Klemm-Positionierelement (4) und dem Abstütz-Positionierelement (3), wobei das Klemm-Positionierelement (4) in einem Anfangszustand verbleibt und einen ausreichenden Gleitraum für die ursprüngliche Lagerbaugruppe (a) zum Durchtritt durch das Klemm-Positionierelement (4) aufrechterhält;
Einstellen des Klemm-Positionierelements (4), um eine Oberfläche der Rotorwelle (1) zur Positionierung zu klemmen, und Einstellen des Abstütz-Positionierelements (3), um das Abstütz-Positionierelement (3) von der äußeren Endfläche der Rotorwelle (1) zu lösen, und axiales Herausziehen der ursprünglichen Lagerbaugruppe (a) von einem äußeren Ende der Rotorwelle (1);
axiales Aufschieben einer neuen Lagerbaugruppe (b) von dem äußeren Ende der Rotorwelle (1) in den Bereich zwischen dem Klemm-Positionierelement (4) und dem Abstütz-Positionierelement (3), Einstellen des Abstütz-Positionierelements (3), um wieder gegen die äußere Endfläche der Rotorwelle (1) zu drücken, und Einstellen des Klemm-Positionierelements (4), um die Rotorwelle (1) zu lösen; und
axiales Verschieben der neuen Lagerbaugruppe (b) in eine Montageposition auf der Rotorwelle (1).

2. Demontage- und Montageverfahren für ein Motorlager nach Anspruch 1, wobei das Verfahren vor dem Einführen der Mehrzahl von Montagestangen (5) an der Endfläche des Enddeckels ferner umfasst:
axiales Verbinden einer Hilfswelle (2), die dazu ausgebildet ist, einen Arbeitsraum bis zu dem äußeren Ende der Rotorwelle (1) zu verlängern.

3. Demontage- und Montageverfahren für ein Motorlager nach Anspruch 2, wobei das Verbinden einer Hilfswelle (2) mit dem äußeren Ende der Rotorwelle (1) umfasst:
Ausbilden eines Gewindelochs (102) an einer Achsmitte auf der äußeren Endfläche der Rotorwelle (1), und Bereitstellen eines Gewindezapfens an einer Achsmitte auf einer inneren Endfläche der Hilfswelle (2), um eine lösbare Verbindung zwischen der Hilfswelle (2) und der Rotorwelle (1) durch Zusammenwirken des Gewindelochs (102) und des Gewindezapfens zu verwirklichen.

4. Demontage- und Montageverfahren für ein Motorlager nach Anspruch 1, wobei das Einführen der Mehrzahl von Montagestangen (5) an der Endfläche des Enddeckels umfasst:
Bestimmen von 4 bis 8 Montagelöchern (101) an der Endfläche des Enddeckels entlang eines Umfangs mit einem vorbestimmten Radius, axiales Einführen jeder der Montagestangen (5) in das entsprechende Montageloch (101), sowie Gewindeverbinden eines Endes jeder der Montagestangen (5) mit dem entsprechenden Montageloch (101).

5. Demontage- und Montageverfahren für ein Motorlager nach Anspruch 4, wobei das sukzessive Montieren eines Klemm-Positionierelements (4) und eines Abstütz-Positionierelements (3) auf der Mehrzahl von Montagestangen (5) umfasst:
gleichzeitiges Aufstecken des Klemm-Positionierelements (4) auf die Mehrzahl von Montagestangen (5), und axiales Verschieben des Klemm-Positionierelements (4) über eine vorbestimmte Strecke in eine Position, die der Oberfläche der Rotorwelle (1) entspricht;
gleichzeitiges Aufstecken des Abstütz-Positionierelements (3) auf die Mehrzahl von Montagestangen (5), und axiales Verschieben des Abstütz-Positionierelements (3) zu Enden der Mehrzahl von Montagestangen (5), und Halten einer Oberfläche des Abstütz-Positionierelements (3) in Anlage an der äußeren Endfläche der Rotorwelle (1); und
das Befestigen des Abstütz-Positionierelements (3) an einer aktuellen Position mittels Befestigungselementen (6) an den Enden der Mehrzahl von Montagestangen (5).

6. Demontage- und Montageverfahren für ein Motorlager nach Anspruch 1, wobei beim Einstellen des Klemm-Positionierelements (4) ein Klemmradius des Klemm-Positionierelements (4) eingestellt wird, um die Oberfläche der Rotorwelle (1) zu klemmen oder zu lösen; und beim Einstellen des Abstütz-Positionierelements (3) eine Gleitstrecke des Abstütz-Positionierelements (3) auf der Mehrzahl von Montagestangen (5) eingestellt wird, um das Abstütz-Positionierelement (3) gegen die äußere Endfläche der Rotorwelle (1) zu drücken oder das Abstütz-Positionierelement (3) von der äußeren Endfläche der Rotorwelle (1) zu lösen.

7. Demontage- und Montageverfahren für ein Motorlager nach Anspruch 1, wobei beim Herausziehen der ursprünglichen Lagerbaugruppe (a) oder beim Einschieben der neuen Lagerbaugruppe (b) durch ein Antriebssystem in axialer Richtung eine Kraft auf eine äußere Endfläche der ursprünglichen Lagerbaugruppe (a) oder der neuen Lagerbaugruppe (b) ausgeübt wird.

8. Demontage- und Montageverfahren für ein Motorlager nach Anspruch 7, wobei das Verfahren nach dem axialen Verschieben der neuen Lagerbaugruppe (b) in eine Montageposition auf der Rotorwelle (1) ferner umfasst:
Einstellen des Abstütz-Positionierelements (3), um das Abstütz-Positionierelement (3) von der äußeren Endfläche der Rotorwelle (1) zu lösen;
sukzessives Abziehen des Abstütz-Positionierelements (3) und des Klemm-Positionierelements (4) von der Mehrzahl von Montagestangen (5); und
Entfernen der Mehrzahl von Montagestangen (5) aus der Mehrzahl von Montagelöchern (101).

## Revendications

1. Procédé de démontage et de montage pour un roulement de moteur, comprenant :
l'insertion axialement d'une pluralité de tiges de montage (5) dans une pluralité de trous de montage (101) sur une surface d'extrémité d'un flasque d'extrémité, et le montage successif d'un élément de serrage-positionnement (4) et d'un élément de butée-positionnement (3) sur la pluralité de tiges de montage (5) ;
l'appui, par l'élément de butée-positionnement (3), contre une surface d'extrémité extérieure d'un arbre rotatif de rotor (1) pour le positionnement, et l'extraction axialement d'un ensemble de roulement d'origine (a) monté sur l'arbre rotatif de rotor (1) jusque dans l'espace situé entre l'élément de serrage-positionnement (4) et l'élément de butée-positionnement (3), dans lequel l'élément de serrage-positionnement (4) reste dans un état initial et maintient un espace de coulissement suffisant pour permettre à l'ensemble de roulement d'origine (a) de passer à travers l'élément de serrage-positionnement (4) ;
le réglage de l'élément de serrage-positionnement (4) pour serrer une surface de l'arbre rotatif de rotor (1) pour le positionnement et le réglage de l'élément de butée-positionnement (3) pour dégager l'élément de butée-positionnement (3) de la surface d'extrémité extérieure de l'arbre rotatif de rotor (1), et l'extraction axialement de l'ensemble de roulement d'origine (a) depuis une extrémité extérieure de l'arbre rotatif de rotor (1) ;
le coulissement axial d'un nouvel ensemble de roulement (b) depuis l'extrémité extérieure de l'arbre rotatif de rotor (1) jusque dans l'espace situé entre l'élément de serrage-positionnement (4) et l'élément de butée-positionnement (3), le réglage de l'élément de butée-positionnement (3) pour appuyer de nouveau contre la surface d'extrémité extérieure de l'arbre rotatif de rotor (1), et le réglage de l'élément de serrage-positionnement (4) pour desserrer l'arbre rotatif de rotor (1) ; et
le coulissement axial du nouvel ensemble de roulement (b) jusqu'à une position de montage sur l'arbre rotatif de rotor (1).

2. Procédé de démontage et de montage pour un roulement de moteur selon la revendication 1, dans lequel, avant l'insertion de la pluralité de tiges de montage (5) sur la surface d'extrémité du flasque d'extrémité, le procédé comprend en outre :
la connexion axialement d'un arbre auxiliaire (2) configuré pour étendre un espace d'opération jusqu'à l'extrémité extérieure de l'arbre rotatif de rotor (1).

3. Procédé de démontage et de montage pour un roulement de moteur selon la revendication 2, dans lequel la connexion d'un arbre auxiliaire (2) à l'extrémité extérieure de l'arbre rotatif de rotor (1) comprend :
la définition d'un trou taraudé (102) à un centre d'axe sur la surface d'extrémité extérieure de l'arbre rotatif de rotor (1), et la disposition d'un goujon fileté à un centre d'axe sur une surface d'extrémité intérieure de l'arbre auxiliaire (2) pour réaliser une connexion démontable entre l'arbre auxiliaire (2) et l'arbre rotatif de rotor (1) par coopération du trou taraudé (102) et du goujon fileté.

4. Procédé de démontage et de montage pour un roulement de moteur selon la revendication 1, dans lequel l'insertion de la pluralité de tiges de montage (5) sur la surface d'extrémité du flasque d'extrémité comprend :
la détermination de 4 à 8 trous de montage (101) sur la surface d'extrémité du flasque d'extrémité le long d'une circonférence ayant un rayon prédéterminé, l'insertion axialement de chacune des tiges de montage (5) dans le trou de montage correspondant (101), et la connexion filetée d'une extrémité de chacune des tiges de montage (5) avec le trou de montage correspondant (101).

5. Procédé de démontage et de montage pour un roulement de moteur selon la revendication 4, dans lequel le montage successif d'un élément de serrage-positionnement (4) et d'un élément de butée-positionnement (3) sur la pluralité de tiges de montage (5) comprend :
l'enfilage de l'élément de serrage-positionnement (4) simultanément sur la pluralité de tiges de montage (5), et le coulissement axial de l'élément de serrage-positionnement (4) sur une distance prédéterminée jusqu'à une position correspondant à la surface de l'arbre rotatif de rotor (1) ;
l'enfilage de l'élément de butée-positionnement (3) simultanément sur la pluralité de tiges de montage (5), et le coulissement axial de l'élément de butée-positionnement (3) jusqu'aux extrémités de la pluralité de tiges de montage (5) tout en maintenant une surface de l'élément de butée-positionnement (3) en butée contre la surface d'extrémité extérieure de l'arbre rotatif de rotor (1) ; et
la fixation de l'élément de butée-positionnement (3) à une position actuelle via des éléments de fixation (6) aux extrémités de la pluralité de tiges de montage (5).

6. Procédé de démontage et de montage pour un roulement de moteur selon la revendication 1, dans lequel, lorsque l'élément de serrage-positionnement (4) est réglé, un rayon de serrage de l'élément de serrage-positionnement (4) est réglé pour serrer ou desserrer la surface de l'arbre rotatif de rotor (1) ; et lorsque l'élément de butée-positionnement (3) est réglé, une distance de coulissement de l'élément de butée-positionnement (3) sur la pluralité de tiges de montage (5) est réglée pour appuyer l'élément de butée-positionnement (3) contre la surface d'extrémité extérieure de l'arbre rotatif de rotor (1) ou pour dégager l'élément de butée-positionnement (3) de la surface d'extrémité extérieure de l'arbre rotatif de rotor (1).

7. Procédé de démontage et de montage pour un roulement de moteur selon la revendication 1, dans lequel, lorsque l'ensemble de roulement d'origine (a) est extrait ou lorsque le nouvel ensemble de roulement (b) est coulissé en place, une force est appliquée axialement à une surface d'extrémité extérieure de l'ensemble de roulement d'origine (a) ou du nouvel ensemble de roulement (b) par un système d'entraînement.

8. Procédé de démontage et de montage pour un roulement de moteur selon la revendication 7, dans lequel, après le coulissement axial du nouvel ensemble de roulement (b) jusqu'à une position de montage sur l'arbre rotatif de rotor (1), le procédé comprend en outre :
le réglage de l'élément de butée-positionnement (3) pour dégager l'élément de butée-positionnement (3) de la surface d'extrémité extérieure de l'arbre rotatif de rotor (1) ;
le retrait par coulissement successif de l'élément de butée-positionnement (3) et de l'élément de serrage-positionnement (4) hors de la pluralité de tiges de montage (5) ; et
le retrait de la pluralité de tiges de montage (5) de la pluralité de trous de montage (101).
